# EUROPÄISCHE PATENTSCHRIFT

(11) **EP 2 017 522 B1**
(45) Veröffentlichungstag und Bekanntmachung des Hinweises auf die Patenterteilung: **22.12.2010**
(21) Anmeldenummer: 08160569.3
(22) Anmeldetag: 16.07.2008
(51) Int. Cl.: F16L 59/135

(54) **Halterung für Rohre**
Holding device for pipes
Fixation pour tuyaux

(30) Priorität: 17.07.2007 AT 11262007
(43) Veröffentlichungstag der Anmeldung: 21.01.2009
(73) Patentinhaber: Mikl, Josef, 5020 Salzburg (AT)
(72) Erfinder: Mikl, Josef, 5020 Salzburg (AT)
(74) Vertreter: Babeluk, Michael

(56) Entgegenhaltungen:
- EP-A- 0 020 943
- DE-A1- 3 941 792
- DE-A1- 10 215 647
- DE-A1- 10 220 035
- FR-A- 2 769 352
- US-A- 4 298 554

## Beschreibung

Die vorliegende Erfindung betrifft eine Halterung für Rohre gemäß dem Oberbegriff von Patentanspruch 1.

Wasserrohre, Heizungsrohre oder dgl. werden in Gebäuden oft von Zwischendecken abgehängt, was eine sehr einfache Montage ermöglicht und die Wartung vereinfacht. Zumeist ist es in solchen Fällen erforderlich, eine thermisch Isolierung vorzusehen, um Wärmeverluste zu vermeiden und die Bildung von Kondenswasser zu verhindern. Im Bereich der Aufhängungen wird eine solche Isolierung zumeist so durchgeführt, dass zwei kurze Halbschalen aus einem Isoliermaterial um das Rohr gelegt werden und mit einem ringförmigen Bauteil umschlossen werden, an dem die Halterung befestigt wird. Der ringförmige Bauteil ist dabei in der Regel zweiteilig und aus Metall hergestellt, um die notwendigen Belastungen aufnehmen zu können. Die Verbindung der beiden Teile erfolgt dabei in der Regel durch Verschraubung. Herstellung und Montage sind dabei relativ aufwendig und kostenintensiv.

Aus der DE 102 15 647 A ist eine Rohrschelle bekannt, die in der oben beschriebenen Art ausgebildet ist. Dabei ist ein Schellenkörper vorgesehen, der in zusammengebautem Zustand im Wesentlichen Kreisform annimmt und das zu haltende Rohr trägt. An der Oberseite des Schellenkörpers ist ein Gewinde für das Einschrauben einer Halterung vorgesehen. Der Verschluss des Schellenkörpers erfolgt in Form eines Rastverschlusses mit einer Mehrzahl von Stellungen. Mit einer solchen Rohrschelle ist es möglich, Rohre unterschiedlichen Durchmessers zu halten und dabei die Montage vergleichsweise einfach zu gestalten. Eine durchgängige Isolation der Rohre ist jedoch nicht oder nur mit unverhältnismäßig großem Aufwand möglich.

Weiters zeigt die EP 0 020 943 A eine Hängeklemme für elektrische Leitungen, die im Wesentlichen aus einem einstückigen Blechbauteil besteht. Eine Zunge am Ende dieses Bauteils wird nach dem Umschließen der elektrischen Leitung durch eine entsprechende Öffnung gesteckt und wird dort durch die Federwirkung entsprechend verriegelt. Schwerere Teile wie Rohre können mit einer solchen Vorrichtung nicht abgehängt werden.

Die gattungsbildende DE 102 20 035 A1 beschreibt eine Rohrhaltevorrichtung mit einem Halteelement sowie einer Rohrummantelung, wobei die Rohrummantelung einen Druckverteilmantel und einer zwischen Druckverteilmantel und Rohr angeordneten Dämmschicht aufweist. Eine ähnliche Vorrichtung kann auch der FR 2 769 352 A1 entnommen werden.

Die US 4, 298,554 A schließlich offenbart die Herstellung von Dämmelementen, deren Halbschalen über eine Nut/Feder-Verbindung zusammengesetzt werden können.

Ein Nachteil aller bekannten Lösungen besteht darin, dass die Herstellung einer durchgehenden Isolierung des Rohrs nur mit großen Aufwand möglich ist.

Aufgabe der vorliegenden Erfindung ist es, eine Vorrichtung der oben beschriebenen Art so weiterzubilden, dass ein einfacher Aufbau erreicht wird. Darüber hinaus soll die Montage erleichtert werden. Insbesondere soll ein Isoliersystem angegeben werden, das eine durchgängige und effiziente Isolierung des gesamten Rohres mit geringem Arbeitsaufwand beim Zusammenbau ermöglicht.

Erfindungsgemäß werden diese Aufgaben durch die Merkmale von Patentanspruch 1 gelöst.

Durch diese Lösung besteht der gesamte Haltebügel samt allen notwendigen Vorkehrungen für den Zusammenbau und die Befestigung aus einem einzigen Bauteil, was eine erhebliche Vereinfachung darstellt. Darüber hinaus wird die Montage wesentlich vereinfacht, da zur Befestigung lediglich die Verschlusslasche umgebogen werden muss. Wesentlich an der vorliegenden Erfindung ist weiters die Tatsache, dass zwischen den einzelnen Aufhängungen Rohrabschnitte freibleiben, die von ebenen Flächen senkrecht zur Rohrachse begrenzt sind. Auf diese Weise kann man nach der Montage der Rohre die zwischen den Aufhängungen frei gebliebenen Bereiche mit herkömmlichen Isolierelementen in der Form von geschlitzten Isolierrohren oder Halbschalen isolieren, ohne Teile des Rohrs unisoliert zu lassen oder Flicken einsetzen zu müssen.

Vorzugsweise ist vorgesehen, dass ein erstes Isolierelement fest mit der Halterung verbunden ist. Erfindungsgemäß sind das erste Isolierelement und das zweite Isolierelement formschlüssig miteinander verbindbar. Auf diese Weise ist es möglich, zusätzliche Stabilität zu erreichen.

Die beiden Isolierelemente können aus PU-Schaum hergestellt sein, wodurch eine besonders gute Wärmeisolation erreicht wird.

Besonders günstig ist es, wenn die formschlüssige Verbindung als Schwalbenschwanz-Verbindung ausgebildet ist. Auf diese Weise können Wärmebrücken vermieden werden.

Vorzugsweise ist die Verschlusslasche gelenkig am Haltebügel angeformt. Die gelenkige Verbindung kann durch Einschnitte, Ausstanzungen oder eine Materialverdünnung am Übergang des eigentlichen Haltebügels zur Verschlusslasche dargestellt werden und erleichtert das Umbiegen.

Ein besonders einfacher und kostengünstiger Aufbau wird dadurch erreicht, dass die Aufhängung durch eine Öffnung des ersten Isolierelements hindurchgeführt und mit einer Platte gesichert ist.

In der Folge wird die vorliegende Erfindung anhand des in den Figuren dargestellten Ausführungsbeispiels näher erläutert. Es zeigen:
- Fig. 1: eine erfindungsgemäße Ausführungsvariante in der Draufsicht;
- Fig. 2: einen Schnitt nach Linie II-II in Fig. 1;
- Fig. 3: einen Schnitt nach Linie III-III in Fig. 1;
- Fig. 4: eine seitliche Ansicht der Ausführungsvariante von Fig. 1 bis Fig. 3; und
- Fig. 5: einen Haltebügel im Detail.

Von einem Gebäudeteil 5, beispielsweise einer Zwischendecke, sind über Aufhängungen 4 erfindungsgemäße Halterungen abgehängt, die ein Rohr 3 tragen.

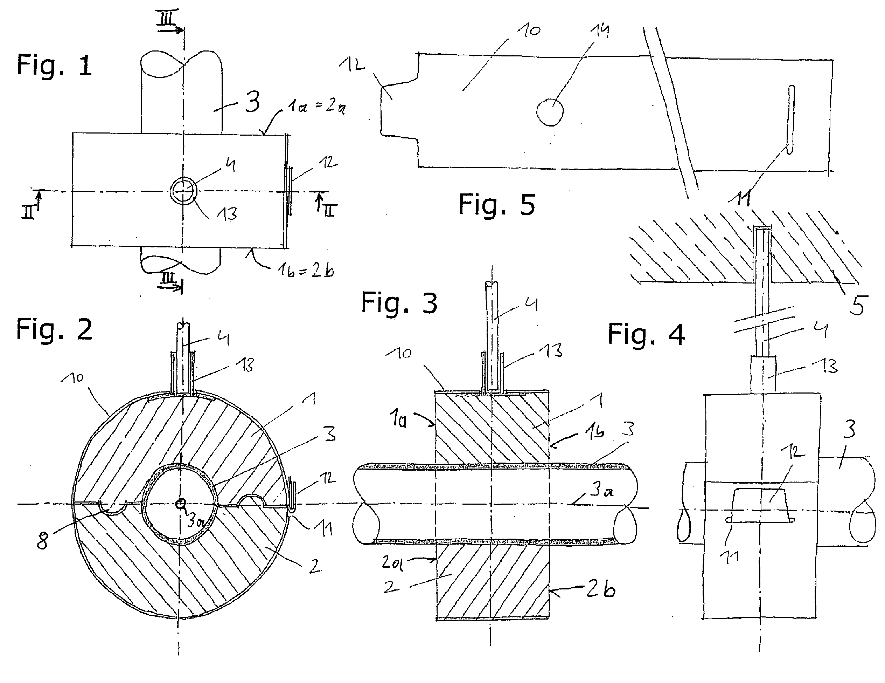

Fig. 2 und Fig. 3 zeigen den Aufbau einer solchen Halterung im Detail. An der Aufhängung 4 ist eine Schraubhülse 13 befestigt, die einen Haltebügel 10 trägt. Der Haltebügel 10 besitzt einen im Wesentlichen zylindrischen Aufbau und umschließt ein erstes Isolierelement 1 und ein zweites Isolierelement 2, die koaxial zum Haltebügel 10 ein Rohr 3 tragen. Die beiden Isolierelemente 1, 2 sind über eine formschlüssige Verbindung 8 untereinander verbunden.

Der Haltebügel 10 besitzt eine Öffnung 11 an einem seiner Enden und am gegenüberliegende Ende eine Verschlusslasche 12. Beim Zusammenbau wird die Verschlusslasche 12 durch die Öffnung 11 gesteckt und umgebogen, so dass eine feste Verbindung der beiden Enden hergestellt wird und die beiden Isolierelemente 1, 2 festgehalten werden. Die Schraubhülse 13 wird in einer weiteren Öffnung 14 des Haltebügels 10 aufgenommen.

Die beiden Isolierelemente 1, 2 sind aus geschäumtem Polyurethan (PU) hergestellt und besitzen Stirnflächen 1a, 1b bzw. 2a, 2b, die zueinander parallel und rechtwinkelig auf die Achse 3a des Rohrs 3 angeordnet sind. Auf diese Weise ist ein einfacher Anschluss einer hier nicht dargestellten Isolierschale für das Rohr 3 sichergestellt. Die Ränder des Haltebügels 10 liegen ebenfalls in der Ebene der Stirnflächen 1a, 1b bzw. 2a, 2b, so dass ein völlig ebener Abschluss gegeben ist.

Die vorliegende Erfindung ermöglicht es, eine schnelle und kostengünstige Abhängung von Rohren 3 zu verwirklichen. Nach Befestigung des Rohres 3 durch die erfindungsgemäßen Halterungen können die verbleibenden Zwischenräume in einfacher Weise mit Isolierelementen isoliert werden.

## Patentansprüche

1. Halterung für Rohre (3), mit einer an einem Bauwerksteil befestigbaren Aufhängung (4) und mit einem Haltebügel (10), der als Metallband ausgebildet ist, das an einem Ende eine Öffnung (11) und am anderen Ende eine verformbare Verschlusslasche (12) aufweist, wobei im Haltebügel mindestens zwei im Wesentlichen als Halbschalen ausgebildete Isolierelemente (1, 2) gehalten sind, die zylindrisch ausgebildet sind und zwei ebene Stirnflächen (1a, 1b; 2a, 2b) aufweisen, die senkrecht zur Achse (3a) des Rohrs (3) ausgebildet sind, **dadurch gekennzeichnet, dass** das erste Isolierelement (1) und das zweite Isolierelement (2) formschlüssig miteinander verbindbar sind, wobei die Ränder des Haltebügels (10) in der Ebene der Stirnflächen (1a, 1b, 2a, 2b) der Isolierelemente (1, 2) liegen.

2. Halterung nach Anspruch 1, **dadurch gekennzeichnet, dass** die formschlüssige Verbindung der beiden Isolierelemente (1, 2) als Schwalbenschwanz-Verbindung (8) ausgebildet ist.

3. Halterung nach Anspruch 1 oder 2, **dadurch gekennzeichnet, dass** die beiden Isolierelemente (1, 2) aus PU-Schaum hergestellt sind.

4. Halterung nach Anspruch 1 bis 3, **dadurch gekennzeichnet, dass** die Verschlusslasche (12) gelenkig am Haltebügel (10) angeformt ist.

5. Halterung nach Anspruch 1 bis 4, **dadurch gekennzeichnet, dass** die Aufhängung (4) durch eine Schraubhülse (13) am Haltebügel (10) befestigt ist.

## Claims

1. A holder for pipes (3), comprising a suspension (4) which can be fastened to a part of a structure and a holding bracket (10) which is arranged as a metal strip which comprises an opening (11) at one end and a deformable closure tab (12) at the other end, with at least two insulating elements (1, 2) which are arranged cylindrically, are substantially arranged as half-shells, are held in the holding bracket (10) and comprise two planar face sides (1a, 1b; 2a, 2b) which are arranged perpendicularly to the axis (3a) of the pipe (3), **characterised in that** the first insulating element (1) and the second insulating element (2) can be joined with one another in an interlocking manner, with the edges of the holding bracket (10) being disposed in the plane of the face surfaces (1a, 1b, 2a, 2b) of the insulating elements (1, 2).

2. A holder according to claim 1, **characterised in that** the interlocking connection of the two insulating elements (1, 2) is arranged as a dovetail joint (8).

3. A holder according to claim 1 or 2, **characterised in that** the two insulating elements (1, 2) are made of polyurethane foam.

4. A holder according to claim 1 to 3, **characterised in that** the closure tab (12) is attached in an articulated manner to the holding bracket (10).

5. A holder according to claim 1 to 4, **characterised in that** the suspension (4) is fastened to the holding bracket (10) by a threaded sleeve (13).

## Revendications

1. Dispositif de fixation de tuyaux (3) comportant un moyen d'accrochage (4) qui se fixe à une partie d'immeuble, et un collier (10) formé par un ruban métallique dont une extrémité comporte une ouverture (11) et l'autre extrémité une patte d'accrochage (12), déformable,
le collier comportant au moins deux éléments isolants (1, 2) réalisés principalement sous la forme de demi-coquilles, cylindriques, et ayant deux faces frontales planes (1a, 1b ; 2a, 2b) perpendiculaires à l'axe (3a) du tuyau (3),
**caractérisé en ce que**
le premier élément isolant (1) et le second élément isolant (2) sont reliés par une liaison par la forme, et
les bords du collier (10) se situent dans le plan des surfaces frontales (1a, 1b ; 2a, 2b) des éléments isolants (1, 2).

2. Dispositif de fixation selon la revendication 1,
**caractérisé en ce que**
la liaison par la forme des deux éléments isolants (1, 2) est réalisée comme liaison en queue d'aronde (8).

3. Dispositif de fixation selon la revendication 1 ou 2,
**caractérisé en ce que**
les deux éléments isolants (1, 2) sont fabriqués en mousse de polyuréthane.

4. Dispositif de fixation selon l'une des revendications 1 à 3,
**caractérisé en ce que**
la patte de liaison (12) est formée de manière articulée sur le collier (10).

5. Dispositif de fixation selon l'une des revendications 1 à 4,
**caractérisé en ce que**
le moyen d'accrochage (4) est fixé au collier (10) par l'intermédiaire d'un manchon fileté (13).
